# EUROPÄISCHE PATENTSCHRIFT

(11) **EP 2 440 750 B1**
(45) Veröffentlichungstag und Bekanntmachung des Hinweises auf die Patenterteilung: **23.12.2015**
(21) Anmeldenummer: 10744676.7
(22) Anmeldetag: 10.06.2010
(51) Int. Cl.: F01K 13/00, F02C 3/20, F01K 23/06, F01K 23/10, C10B 49/06, C10J 3/14, F02B 43/08, F02C 3/28

(54) **VERFAHREN ZUR ERZEUGUNG MECHANISCHER LEISTUNG**
METHOD FOR GENERATING MECHANICAL POWER
PROCÉDÉ DE PRODUCTION DE PUISSANCE MÉCANIQUE

(30) Priorität: 10.06.2009 DE 102009024480
(43) Veröffentlichungstag der Anmeldung: 18.04.2012
(73) Patentinhaber: Ecoloop GmbH, 38640 Goslar (DE)
(72) Erfinder: BAUMANN, Leonhard, 84556 Kastl (DE); MÖLLER, Roland, 83376 Truchtlaching (DE)
(74) Vertreter: Patentanwälte Olbricht Buchhold Keulertz
(86) Internationale Anmeldenummer: PCT/EP2010/003475
(87) Internationale Veröffentlichungsnummer: WO 2010/142440

(56) Entgegenhaltungen:
- WO-A2-2008/086877
- GB-A- 2 434 618
- JP-A- 2002 004 948
- US-A1- 2004 182 294
- US-A1- 2009 158 661

## Beschreibung

Die vorliegende Erfindung befasst sich mit einem Verfahren zur Erzeugung mechanischer Leistung mit Hilfe wenigstens einer Verbrennungskraftmaschine, deren Abgase wenigstens teilweise als Vergasungsmittel in einem Vergaser unter Anwesenheit kohlenstoffhaltiger Substanzen zu Synthesegas reduziert werden.

Als eines der größten Probleme der Gegenwart wird die globale Erwärmung angesehen, unter welcher man den in den vergangenen Jahren verstärkt beobachteten allmählichen Anstieg der Durchschnittstemperatur der erdnahen Atmosphäre versteht. Dieser Temperaturanstieg hat auch ein Ansteigen der Meeresspiegel infolge eines Abschmelzens der Polkappen zur Folge und es wird erwartet, dass diese Entwicklung in der Zukunft noch zunimmt. Die hauptsächliche Ursache dieser Erwärmung liegt nach dem gegenwärtigen wissenschaftlichen Verständnis in der Verstärkung des Treibhauseffektes durch das Handeln des Menschen, der die Zusammensetzung der Atmosphäre durch das Verbrennen fossiler Brennstoffe mit den damit einhergehenden Emissionen von Kohlendioxid (CO₂) verändert. Beispiele für CO₂-Emissionsquellen sind Fabriken, industrielle Anlagen, Wärmekraftwerke, Automobile, stationäre Verbrennungsmotoren, Flugzeuge und dergleichen. Inzwischen wird die Reduzierung des Kohlendioxidausstoßes als eine der wichtigsten Maßnahmen zum Schutz des Klimas und der Vermeidung von Naturkatastrophen im Zusammenhang mit der Erderwärmung angesehen.

Zur Senkung der Kohlendioxidemission spielt die Entwicklung alternativer Energiequellen eine wesentliche Rolle, deren CO₂-Bilanz verbessert ist oder - im Idealfall - neutral ausfällt. Zu nennen sind hier beispielsweise die Brennstoffzellentechnik, die Energiegewinnung aus Sonnenlicht, Wind und Wasser, die Verwendung von nachwachsenden Energieträgern usw. Der aus dem Gesichtspunkt der CO₂-Bilanz grundsätzlich günstige Einsatz von Kernenergie ist wegen des Gefahrenpotentials und der ungelösten Endlagerungsproblematik radioaktiver Abfälle politisch stark umstritten.

Zur Vermeidung unnötiger Kohlendioxidemissionen wird intensiv an der Verbesserung der Energieeffizienz im Hinblick auf den Einsatz und die Umwandlung von Energie gearbeitet. Dieses Verhältnis von Nutzen zum Energieaufwand ist sowohl bei der Erzeugung von Sekundärenergie, wie z. B. bei der Stromerzeugung in Kraftwerken oder dem Betrieb von Verstromungsmotoren, als auch bei der Nutzung von Primär- oder Sekundärenergie relevant. Andererseits ist man bemüht, den spezifischen Energiebedarf in Industrieprozessen, Wohnhäusern, Kraftfahrzeugen, Elektrogeräten und dergleichen zu optimieren.

Weitere Forschungs- und Entwicklungsprojekte haben es sich zur Aufgabe gemacht, große Kohlendioxidemittenten, wie z. B. Kohlekraftwerke, "kohlendioxidfrei" auszuführen, wobei das Kohlendioxid durch Ad- bzw. Absorption aus Rauchgasen isoliert und dann nachhaltig in die Erdkruste oder die Tiefsee verbracht werden soll. Neben dem äußerst hohen technischen Aufwand und den Wirkungsgradverlusten durch die Isolierung des CO₂ bestehen insbesondere im Hinblick auf die Nachhaltigkeit derartiger Maßnahmen Zweifel.

Größere Bedeutung haben in den vergangenen Jahren auch Verbrennungsmotoren gewonnen, die ihrerseits mechanische Leistung insbesondere zum Antrieb von Generatoren zur Stromerzeugung abgeben. Als Beispiele können Gasturbinen für Großanlagen, aber auch Kolbenmotoren genannt werden, die in kleinen Anlagen eine delokale Nutzung auch von regenerativen Energieträgern bei geringem Investitionsaufwand ermöglichen. Diese sogenannten Gasmotoren können mit brennbaren Gasen betrieben werden, wie sie in Biomassekraftwerken, Holzvergasungsanlagen oder anderen Prozessen zur Erzeugung synthetischer brennbarer Gase anfallen. Die Anlagen können je nach Gasanfall modular ausgelegt werden.

Nachteilig bei solchen Gasmotoren ist ihr recht geringer Wirkungsgrad, der je nach Brennstoff und anderen Faktoren lediglich ca. 30 - 40% beträgt, d. h. lediglich 30 - 40% der in dem eingesetzten Brennstoff enthaltenen Energie kann letztlich in elektrische Energie umgesetzt werden. Die hohen Wirkungsgradverluste sind vor allem durch die hohe Wärmeabgabe solcher Verbrennungsmotore bedingt, wobei vor allem die Abgase mit einer Temperatur von 500 - 800°C zu nennen sind, die in der Regel nach Durchströmen von Abgaskatalysatoren ungenutzt in die Atmosphäre emittiert werden. Je nach Brennstoff und Motorentyp gehen alleine 30% der eingesetzten Energie über die heißen Motorenabgase verloren, wobei weitere Wärmeverluste durch innere Reibung und die Notwendigkeit verloren gehen, die Motoren insbesondere im Bereich der Brennräume zu kühlen, um mechanische Schäden zu vermeiden. Aus Großanlagen, insbesondere bei Gas-Dampf-Kraftwerken ist es bekannt, die heißen Abgase der dort eingesetzten Gasturbinen in nachgeschalteten Abhitzekesseln in Heißdampf umzuwandeln, wobei Wirkungsgrade von bis zu 55% erreicht werden können. Die thermische oder elektrische Nutzung der Abwärme der heißen Abgase erfordert jedoch hohen technischen Aufwand mit entsprechendem Investitionsbedarf, so dass diese Technik in kleinen, delokalen Anlagen kaum sinnvoll eingesetzt werden kann.

Die DE 20 2007 002 602 U1 schlägt den Einsatz von Methylzyclohexan als Arbeitsmedium vor, das nach indirektem Aufheizen mit heißem Motorenabgas den Aggregatzustand wechselt und als Dampf eine Kraftmaschine antreibt. Nachteilig ist dabei, dass energieintensive Speisepumpen angetrieben werden müssen, um das rückkondensierte Arbeitsmedium wieder durch Einbringen in den Druckbereich des Verdampfers in den Kreislauf zurückzuführen.

Die DE 10 2006 035 893 A1 schlägt ein Verfahren vor, bei welchem CO₂-haltiges Abgas über eine kombinierte Anlagenkonzeption aus Wasser-Elektrolyse, katalytischer Reaktion in Plasmageneratoren und Umwandlung des entstehenden Synthesegases über Fischer-Tropsch-Synthese in Brenn- und Kraftstoffe umgewandelt wird. Auch hier verhindert die Komplexität des Verfahrens eine großtechnische Durchsetzung.

In der DE 601 20 957 T2 wird eine Lösung vorgeschlagen, bei welcher die fühlbare Wärme von Abgasen aus Verbrennungsmotoren zur Beheizung von Vorwärmern, Trocknern oder Vergasungsreaktoren über Wärmetauschersysteme vorgesehen ist, wobei die Verbrennungsmotoren wiederum aus solchen Vergasungsanlagen mit Synthesegas angetrieben werden. Die nicht näher ausgeführte Nutzung der Motorenabgase als Vergasungsmittel ist jedoch nur in geringem Umfang ermöglicht, da der in der Verbrennungsluft enthaltene Stickstoff eine stetige Anreicherung des Innertgasanteils im erzeugten Synthesegas zur Folge hat und entsprechend der Heizwert des erzeugten Synthesegases kontinuierlich sinkt.

Aus der DE 43 42 165 C1 ist ein Verfahren bekannt, bei dem ein Teilstrom der Abgase von Verbrennungskraftmaschinen als Wirbelmedium und Vergasungsmittel in einer Wirbelschichtverbrennung eingesetzt wird, wobei ein kleiner Teil des insgesamt erzeugten CO₂ mit Kohlenstoff in Kohlenmonoxid umgewandelt und dieses wiederum zum Antrieb der Verbrennungskraftmaschine genutzt wird. Der Anteil bei der Vergasung eingesetzter Abgase ist wiederum durch den Stickstoffanteil begrenzt, um eine Anreicherung zu vermeiden, d. h. der wesentliche Teil des Abgases muss wiederum in einem Abhitzekessel zur Dampferzeugung genutzt werden, wenn eine Wirkungsgradverbesserung erreicht werden soll.

Wie bereits erwähnt, beruhen die thermischen Verluste von Verbrennungskraftmaschinen zu etwa gleichen Teilen auf der Abgaswärme einerseits und auf der Notwendigkeit einer Kühlung des Motors vor Überhitzung andererseits. Dabei werden bis zu 30% der frei werdenden Wärmeenergie über das Kühlwasser abgeführt, welches im Rücklauf in der Regel über Luftkühler wieder auf eine niedrigere Vorlauftemperatur abgekühlt wird. Eine Umwandlung der Kühlwasserwärme in elektrische Energie ist aufgrund des niedrigen Temperaturniveaus nicht wirtschaftlich sinnvoll.

Es existieren bereits Nutzungskonzepte für den Energieinhalt des Kühlwassers, wobei die DE 38 05 690 C2 das Warmwasser als Vorwärmmedium für Verbrennungsluft von nachgeschalteten Brennersystemen nutzt, wobei hier gleichzeitig auch das heiße Motorenabgas zur zusätzlichen Beheizung eingesetzt wird. Die DE 42 03 491 beschreibt eine Lösung, bei welcher sowohl die Restwärme des Motorenkühlwassers als auch die heißen Motorenabgase über Wärmetauscher zur Aufheizung eines Boilers dienen, der thermische Energie für andere Verbraucher bereitstellt. Die DE 10 2005 052 206 A1 beschreibt ein Verfahren, bei welchem mittels der fühlbaren Wärme eines Verbrennungsmotors, der mit Gas aus einer Vergasungsanlage betrieben wird, Heißwasser erzeugt wird. Dieses Heißwasser wird dann zusammen mit dem aufgeheizten Kühlwasser des Motors in einer nachgeschalteten Zentralheizungsanlage genutzt. Alle drei vorgenannten Verfahren lassen sich allerdings nur dann sinnvoll einsetzen, wenn Wärmeverbraucher in direkter Umgebung der Verbrennungsmotore vorhanden sind, um die thermischen Energieverluste der Motoren nutzen zu können. Während der Heizperiode mag dies bei kleinen Anlagen noch gegeben sein, im Sommer muss die Wärme allerdings in der Regel ungenutzt an die Umwelt abgegeben werden.

Das gleiche Problem betrifft auch Konzepte zur Nutzung des Energieinhaltes von Maschinenkühlanlagen als Energielieferant für Fernwärmeheizungs-Systeme. Wirtschaftlich ist dies allerdings nur bei sehr großen Anlagen, da, wie bereits erwähnt, bei kleinen Anlagen die Wärmeverbraucher in naher Umgebung der Anlage gelegen sein müssen, da ansonsten der Aufwand für Rohrleitungssysteme in keinem wirtschaftlichen Verhältnis zur möglichen Wärmenutzung steht. Außerhalb der Heizperiode ist der Wärmebedarf ohnehin zu gering, als dass solche Anlagen auch beispielsweise im Sommer einen besseren Wirkungsgrad haben könnten als Anlagen ohne derartige Wärmetauschersysteme. Die US 2004/182294 A1 beschreibt den Einsatz von technischem Sauerstoff in Vergasern. Ein Vertikalschachtofen ist in der WO 2008/086877 A2 beschrieben.
Die Aufgabe der vorliegenden Erfindung besteht darin, ein Verfahren der eingangs genannten Art in seinem Wirkungsgrad zu verbessern.

Erfindungsgemäß wird die Aufgabe durch ein Verfahren der eingangs genannten Art gelöst, bei welchem in der Verbrennungskraftmaschine technischer Sauerstoff für die Verbrennung eingesetzt wird, wobei die Verbrennungskraftmaschine überstöchio metrisch betrieben und der im Abgas noch vorhandene Sauerstoff als Oxidationsgas im Vergaser eingesetzt wird.
Dadurch ergibt sich zunächst der Vorteil, dass das entstehende Abgas der Verbrennungskraftmaschine vollständig in dem Vergaser eingesetzt werden kann, ohne dass die Gefahr einer Anreicherung von Stickstoff bei der Wiederverbrennung der erzeugten Synthesegase bestünde. Dabei ist es auch von Vorteil, die Verbrennungskraftmaschine mit Sauerstoffüberschuß zu betreiben, da im Abgas vorhandener Restsauerstoff in dem Vergaser nutzbringend für die Umsetzung der kohlenstoffreichen Substanzen in Synthesegas eingesetzt werden kann, so dass die dortige Zufuhr von Sauerstoff entfallen oder vermindert werden kann.
Die vollständige Verwertung der Abgase der Verbrennungskraftmaschine in dem Vergaser hat den wesentlichen Vorteil, dass die fühlbare Wärme des Vergasungsmittelgemischs mit den enthaltenen Komponenten CO₂, O₂ und H₂O nahezu vollständig als Energieeintrag in die Energiebilanz der Vergasung und der dort stattfindenden chemischen Reaktionen eingebracht wird. Dabei laufen im Vergasungsprozess im Wesentlichen folgende chemische Reaktionen ab:

### Endotherme Reaktionen:

1. Wassergasreaktion:

   C + H₂O → CO + H₂ (ΔA = 131, 3 KJ/mol)
2. Boudouard-Reaktion:

   C + CO₂ → 2CO (ΔA = 172, 51 KJ/mol)

### Exotherme Reaktion:

Oxidation von Kohlenstoff:

   2C + O₂ → 2CO (ΔA = - 110, 5 KJ/mol)

Um solche Vergasungsprozesse energieoptimiert zu gestalten, wird üblicherweise die energieliefernde Oxidationsreaktion durch gezielte Sauerstoffdosierung in dem Maße betrieben, dass der Energiebedarf der beiden energieverbrauchenden Wassergas- und Boudouard-Reaktionen gerade gedeckt wird. Hierbei geht ein Teil des Wirkungsgrades der Vergasung verloren, da zusätzlich Sauerstoff und Kohlenstoff dem Vergasungsprozess zugeführt werden muss. Die vorliegende Erfindung reduziert den Bedarf an Sauerstoff und Kohlenstoff deutlich, weil die drei Vergasungsmittel CO₂, H₂O und O₂ im Motorenabgas in einem einstellbaren Verhältnis bereits überhitzt dem Vergasungsprozess zugeführt werden können, da für die Verdampfung des Wassers bzw. Aufwärmung der drei Vergasungsmittel die thermischen Verluste der Verbrennungskraftmaschine genutzt werden können.

Die erfindungsgemäße Ausgestaltung des Verfahrens ermöglicht einerseits großtechnische Anlagen zur Gasverstromung, eignet sich aber in Verbindung beispielsweise mit Kolbenmotoren auch zur vorteilhaften Verbesserung des Wirkungsgrades kleiner delokaler Anlagen, wobei eine vollständige Nutzung des im Vergasungsprozess entstehenden Synthesegases in Verbrennungskraftmaschinen ermöglicht wird und elektrische Energie mit einem Wirkungsgrad erzeugt werden kann, der deutlich über dem Stand der Technik liegt.

Vorzugsweise wird das Verfahren mit einer Vergasung in einem Gegenstrom-Wanderbett-Vergaser mit Feststoffmassenstrom durchgeführt. Mit Hilfe von Festmassenströmen ist eine definierte Gasdurchlässigkeit für die Ausgangs- und Reaktionsprodukte gegeben, insbesondere wenn als Vergaser vorzugsweise ein Vertikalschachtofen eingesetzt wird. Die Synthesegasreaktionen können dabei die Abstrahlwärme parallel ablaufender Reaktionen in den Öfen ausnutzen, ohne selbst an deren Reaktion beteiligt zu sein, es sind aber auch Mischformen denkbar, bei denen die Synthesegaserzeugung auch mit Reaktionen in dem Vertikalschachtofen gekoppelt ist, wie beispielsweise bei der Karbidherstellung oder Kalzinierprozessen. Die Vergasung kann beispielsweise in Elektroniederschachtöfen, beispielsweise zur Herstellung von dem bereits erwähnten Kalziumkarbid, Ferrosilizium, Kalziumsilizium, Ferromangan, Phosphor oder Silizium stattfinden, es ist aber auch eine Einbindung von Hochöfen zur Vergasung möglich, wie sie beispielsweise zur Herstellung von Metallen eingesetzt werden. Das Verfahren kann beispielsweise auch mit der Erzeugung von Eisen- und Stahlprodukten kombiniert werden.

Bevorzugt ist eine Ausgestaltung des Verfahrens, bei welcher die kohlenstoffhaltigen Substanzen in einem Vorwärmer vor dem Eintritt in den Vergaser vorgewärmt werden. Ein derartiger Wärmetauscher ermöglicht es, die in der Regel mit Umgebungstemperatur herangeführten kohlenstoffhaltigen Substanzen durch Ausnutzung von Restwärme von Abgasen oder auch des erzeugten Synthesegases zu nutzen, so dass diese wiederum in dem geschlossenen Prozesskreislauf verbleibt und nicht an die Umgebung abgegeben werden muss.

In einer besonders bevorzugten Ausführungsform der Erfindung ist vorgesehen, dass die Verbrennungskraftmaschine mit einem Kühlmittel gekühlt wird, das wenigstens teilweise als Vergasungsmittel eingesetzt wird. Wird z. B. Wasser als Kühlmittel eingesetzt, lässt sich das nach der Kühlung erhitzte Wasser oder, bei entsprechender Erwärmung, auch als Wasserdampf vorliegende Kühlmittel beispielsweise dem Abgas beimischen und kann dann in den Vergaser eingeleitet werden. Eine weitere, interessante Variante, die zudem den Aufwand für ein geschlossenes bzw. teiloffenes Kühlmittelsystem vermeidet, kann vorsehen, dass das Kühlmittel unmittelbar in die Brennräume der Verbrennungskraftmaschine eingespritzt wird. Die innere Kühlung bietet weiterhin den Vorteil, dass sich durch den Einsatz des technischen Sauerstoffs bedingte besonders hohe Temperaturen in den Brennräumen durch beispielsweise das Einspritzen von Wasser technisch besser in den Griff bekommen lassen, als dies durch ein die Brennräume hinter einer Wandung umströmendes Kühlmittel möglich wäre. Weiterhin ermöglicht die innere Kühlung auch die zusätzliche Nutzung der Expansionsenergie, die durch Verdampfung des Kühlmittels im Brennraum freigesetzt und ebenfalls in mechanische Energie umgewandelt wird.

Zur Steuerung der Abgasqualität, der Leistung der Verbrennungskraftmaschine und/oder auch zur Beherrschung der Temperatur in den Brennräumen kann es zweckmäßig sein, dass das Abgas teilweise zur Einlassseite der Verbrennungskraftmaschine rückgeführt wird.

Um das rückgeführte Abgas zu kühlen und die dabei frei werdende Wärme sinnvoll nutzen zu können, ist in bevorzugter Weiterbildung des Verfahrens vorgesehen, dass der rückgeführte Abgasteilstrom in einem Wärmetauscher Wärme an einen Kühlmittelstrom abgibt, der einer Vergasung zugeführt wird, in dem Vorwärmer Wärme zur Vorwärmung der kohlenstoffhaltigen Substanzen abgibt und/oder Wärme zum Betrieb des Vergasers abgibt.

Wie bereits erwähnt, kann das in dem Vergaser erzeugte Synthesegas wenigstens teilweise zum Betrieb der Verbrennungskraftmaschine eingesetzt werden. Entsprechend kann diese als Gasmotor ausgestaltet sein, grundsätzlich ist aber jegliche Art von Verbrennungskraftmaschine mit den dafür geeigneten Brennstoffen in dem erfindungsgemäßen Verfahren einsetzbar.

Wie bereits ebenfalls erwähnt, wird die Verbrennungskraftmaschine überstöchiometrisch betrieben und der im Abgas noch vorhandene Sauerstoff als Oxidationsgas im Vergaser eingesetzt. Auf diese Weise ist es zum einen nicht notwendig, den Vergaser selbst mit einer Sauerstoffversorgung zu versehen und zum anderen kann die Steuerung des Vergasers einlassseitig der Verbrennungskraftmaschine durch entsprechende Zudosierung des technischen Sauerstoffes vorgenommen werden. Entsprechend ist vorzugsweise vorgesehen, dass die Zusammensetzung des Gemisches zum Betrieb der wenigstens einen Verbrennungskraftmaschine durch eine Steuereinheit aus den Teilgasströmen aus technischem Sauerstoff, Synthesegas und ggf. rückgeführtem Abgasstrom gesteuert wird.

Eine weitere vorteilhafte Ausgestaltung des Verfahrens sieht vor, dass wenigstens eine Sekundär-Verbrennungskraftmaschine vorgesehen ist, die mit in dem Vergaser erzeugtem Synthesegas betrieben wird. Diese Sekundär-Verbrennungskraftmaschine, die ebenfalls mechanische Leistung erzeugt, kann mit normaler Luft als Oxidationsmittel betrieben werden, so dass ihr Abgas entsprechend stickstoffhaltig ist. Folglich wird es nicht im Vergaser eingesetzt, um Synthesegas zu erzeugen, seine Abwärme kann aber zur Beheizung des Vergasers und des Vorwärmers genutzt werden. Ggf. kann ein Abgaskatalysator zur Reinigung der Abgase eingesetzt werden.

Die mechanische Leistung wird vorzugsweise zur Stromerzeugung mittels wenigstens eines Generators verwendet, wobei im Falle mehrerer Verbrennungskraftmaschinen diese jeweils einen Generator antreiben können, ggf. aber auch ein einziger Generator vorgesehen sein kann, der von mehreren Verbrennungskraftmaschinen im Verbund angetrieben wird, wobei diese durch geeignete Getriebeelemente gekoppelt sind.

Der technische Sauerstoff wird beispielsweise mittels eines Luftzerlegers oder einer Druckwechseladsorptionsanlage erzeugt, deren Energiebedarf von der erzeugten mechanischen Leistung abgezweigt werden kann. Es soll nochmals betont werden, dass der Energiebedarf für die Erzeugung des technischen Sauerstoffes durch die Wirkungsgradoptimierung des Verfahrens mehr als wettgemacht wird.

Schließlich ist es auch möglich, bei großtechnischen Anlagen, die das erfindungsgemäße Verfahren nutzen, die Erzeugung von Fernwärme einzubinden, wobei beispielsweise jahreszeitenabhängig die Wärme innerhalb des Verfahrens im Bereich des Vergasers oder des Vorwärmers oder eben zur Erzeugung von Fernwärme genutzt werden kann.

Wie bereits erwähnt, kann die Steuerung des Verfahrens mittels der Steuereinheit ausschließlich auf der Eingangsseite der Verbrennungskraftmaschine erfolgen, die Steuereinheit kann aber auch die Beigabe kohlenstoffhaltiger Substanzen für den Vergasungsprozess steuern. Für die Inbetriebnahme des Verfahrens kann es von Vorteil sein, dass dem Vergaser zum Hochfahren der Anlage unmittelbar Brennstoff und Sauerstoff zugeführt werden, um sicherzustellen, dass bereits beim Anlaufen der Verbrennungskraftmaschine deren Abgase in dem Vergaser vollständig zu Synthesegas verarbeitet werden können.

Nachfolgend wird anhand der beigefügten Zeichnungen näher auf Ausführungsbeispiele der Erfindung eingegangen. Es zeigen:
- Fig. 1: ein schematisches Schaubild einer Anlage zur Durchführung eines Verfahrens zur Erzeugung mechanischer Leistung unter Einbindung einer Verbrennungskraftmaschine und eines Vergasers zur Erzeugung von Synthesegas;
- Fig. 2: ein schematisches Schaubild einer erweiterten Anlage mit einer zweiten Verbrennungskraftmaschine für das Verfahren zur Erzeugung mechanischer Leistung.

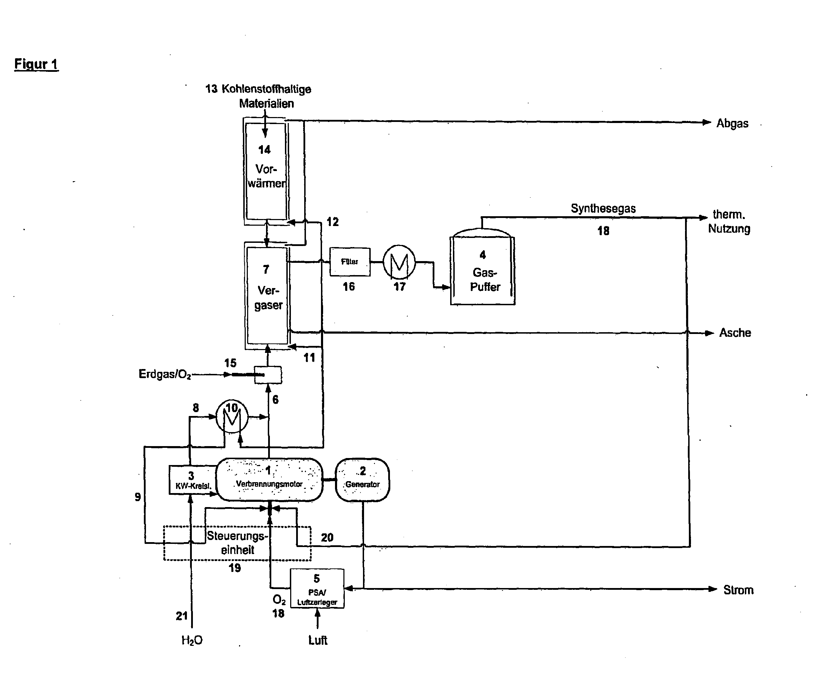

Fig. 1 veranschaulicht ein Verfahren zur Erzeugung von Strom mit Hilfe wenigstens einer Verbrennungskraftmaschine, wobei deren Abgase in einem Vergaser zu Synthesegas umgesetzt werden. Entsprechend ist ein Verbrennungsmotor 1 vorgesehen, der einen Generator 2 zur Stromerzeugung antreibt. Zur Wärmeabfuhr im Bereich des Motors 1 erzeugter überschüssiger Wärme ist ein Kühlwasserkreislauf 3 vorgesehen, dem im Rücklauf 8 aufgewärmtes Kühlwasser entnommen und im Vorlauf 21 kälteres Frischwasser zugeführt werden kann. Der Verbrennungsmotor 1, der als Kolbenmotor oder auch als Gasturbine ausgebildet sein kann, wird mit Synthesegas aus einem Gaspuffer 4 und mit technischem Sauerstoff betrieben, der in eine Druckwechseladsorptionsanlage (PSA) oder einem Luftzerleger 5 erzeugt wird. Grundsätzlich ist es aber auch möglich, anstelle des Synthesegases andere Brennstoffe in dem Verbrennungsmotor einzusetzen, wie z. B. flüssige Brennstoffe oder sonstige Gase.

Die Verbrennungskraftmaschine 1 erzeugt bei dieser Betriebsweise Abgas mit einer Temperatur von mehr als 500°C, das im Wesentlichen aus CO, H₂O-Dampf und, je nach Gemischzusammensetzung, bei überstöchiometrischem Betrieb, überschüssigem O₂ besteht. Bei einer Zuleitung 6 wird dieses Abgasgemisch direkt als Vergasungsmittel einem Vergaser 7 zugeführt.

Bei der dargestellten Anlage wird dem Kühlkreislauf 3 der Verbrennungskraftmaschine 1 kontinuierlich aufgewärmtes Kühlwasser bei 8 entnommen und ebenfalls als Vergasungsmittel, beispielsweise in Abmischung mit dem heißen Motorenabgas bei 6 eingesetzt. Dabei kann es auch zweckmäßig sein, einen Teil der Abgase bei 9 wieder der Einlassseite der Verbrennungskraftmaschine 1 zuzuleiten, wo es in einem bestimmten Verhältnis dem zu verbrennenden Gemisch zugesetzt wird. Die fühlbare Wärme dieses Abgasteilstroms wird vorzugsweise für die Verdampfung des für die Vergasung bestimmten Motorenkühlwassers in einem Wärmetauscher 10 genutzt. Alternativ kann ein Abgasteilstrom aber auch eine indirekte Beheizung des Vergasers 7 bei 11 bewirken oder bei 12 einem Vorwärmer 14 zugeleitet werden, in welchem die zur Vergasung bestimmten kohlenstoffhaltigen Materialien 13 vorgewärmt werden.

Bei dem Vergaser 7 handelt es sich bei dem gezeigten Ausführungsbeispiel um einen Gegenstrom-Wanderbett-Vergaser, dem die Vergasungsmittel, nämlich das Motorenabgas bei 6 und das entnommene Kühlwasser bei 8 von unten zugeführt werden, während die ebenfalls zur Vergasung vorgesehenen kohlenstoffhaltigen Materialien 13, die nahezu jegliche Zusammensetzung haben können, dem Vergaser nach dem Durchlaufen des Vorwärmers 14 von oben zugeführt werden. Zum Anfahren und Vorheizen des Vergasers 7 ist eine Brennereinheit 15 vorgesehen, die mittels Erdgas und Sauerstoff die notwendige Mindesttemperatur während der Anfahrphase der Anlage gewährleistet.

Das entstehende Synthesegas verlässt den Vergasungsreaktor im oberen Bereich, wo es zunächst über Filter 16 und Gaskühler 17 geleitet und dadurch von Staub und Kondensaten befreit wird, bevor es dem Gaspuffer 4 zugeführt wird. Wie bereits erwähnt, wird das Synthesegas im Gaspuffer 4 vorzugsweise als Brennstoff für die Verbrennungskraftmaschine 1 eingesetzt, vorhandene Überschüsse können aber für eine sonstige thermische Nutzung vorgesehen sein.

Die Steuerung der in Fig. 1 gezeigten Anlage erfolgt im Wesentlichen ausschließlich über eine zentrale Steuereinheit 19, die die Zusammensetzung des Verbrennungsgemisches für die Verbrennungskraftmaschine 1 aus den Teilströmen Sauerstoff (aus 5), Synthesegas (bei 20) und rückgeführtem Abgas (bei 9) steuert. Weiterhin steuert diese Einheit die Zufuhr von Frischwasser 21, die wiederum exakt der für die Vergasung entnommenen vorgewärmten Kühlwassermenge bei 8 entspricht.

Vorzugsweise steuert die Steuereinheit 19 die Gesamtanlage so, dass ein konstanter Festmassenstrom an kohlenstoffhaltigen Materialien 13 zum Vergaser 7 eingestellt wird. Aus der Zusammensetzung dieses Festmassenstromes wird die energieoptimierte Zusammensetzung der Vergasungsmittel CO₂, H₂O und O₂ errechnet und die optimale Verbrennungsgemisch-Einstellung und Menge an zugeführtem Frischwasser über die Steuereinheit 19 eingestellt. Selbstverständlich ist es aber auch möglich, über die Steuereinheit 19 den Durchsatz an kohlenstoffhaltigen Materialien 13 zu steuern.

Nicht gezeigt ist eine weitere Möglichkeit, dem Verfahrenskreislauf Wasser einerseits zur Kühlung der Verbrennungskraftmaschine 1 und andererseits als Vergasungsmittel zuzuführen. Dieses kann nämlich auch unmittelbar in die Brennräume der Verbrennungskraftmaschine 1 eingespritzt werden, wo es dazu beitragen kann, die Verbrennungskraftmaschine 1 innerlich zu kühlen und die Verbrennungsabläufe zu kontrollieren. Dabei wird es verdampft und nach Nutzung der Expansionsenergie entsprechend unmittelbar dem Abgasstrom beigegeben. Die Wassereinspritzung erlaubt eine entsprechend kleinere Dimensionierung des Kühlwasserkreislaufes, wobei dieser im Extremfall auch entfallen kann.

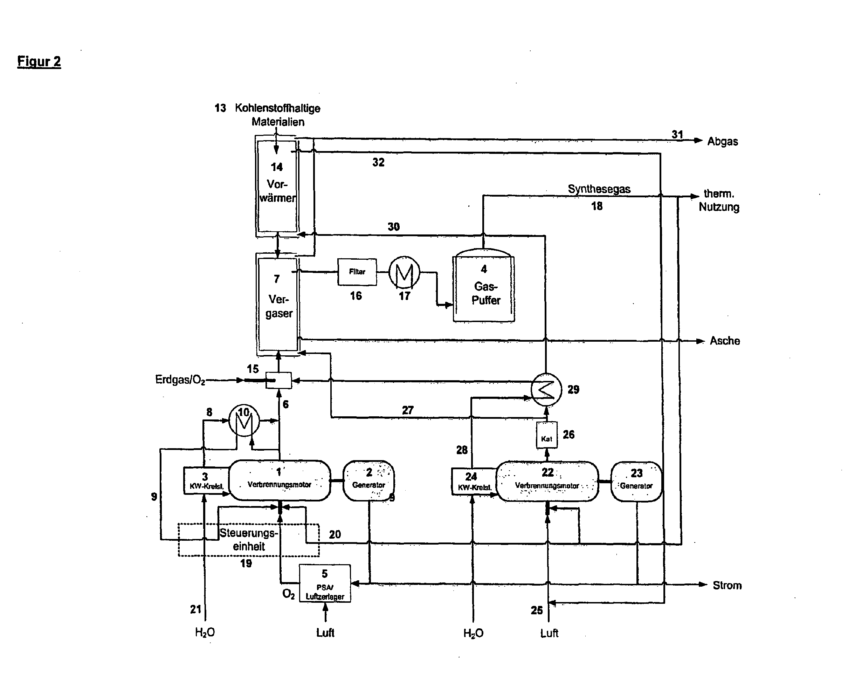

In Fig. 2 ist eine auf der Anlage gemäß Fig. 1 aufbauende komplexere Anlage mit einer sekundären Verbrennungskraftmaschine 22 gezeigt, die ebenfalls einen Generator 23 zur Stromerzeugung antreibt. In ähnlicher Weise wie die Verbrennungskraftmaschine 1 verfügt auch diese Verbrennungskraftmaschine 22 über einen Kühlwasserkreislauf 24 mit Entnahme- und Zufuhrmöglichkeit von Wasser. Die sekundäre Verbrennungskraftmaschine 22 wird jedoch nicht mit technischem Sauerstoff, sondern bei 25 mit Luft versorgt, aber ebenfalls mit Synthesegas aus dem Gaspuffer 4 betrieben. Die Verbrennungskraftmaschine 22 liefert entsprechend stickstoffhaltiges Abgas, das über einen Katalysator 26 zur Abgasreinigung geleitet wird und ebenfalls eine Temperatur von mehr als 500°C aufweist. Die Nutzung der Abwärme dieses Abgases erfolgt bei 27 zur indirekten Beheizung des Vergasers 7, wobei auch das bei 28 entnommene Kühlwasser, das selbstverständlich ebenfalls unmittelbar als Vergasungsmittel in dem Vergaser 7 eingesetzt wird, durch das Abgas in einem Wärmetauscher 29 verdampft werden kann. Die Restwärme des zur Verdampfung des erwärmten Kühlwassers genutzten Abgasstromes kann bei 30 zur indirekten Beheizung des Vorwärmers 14 genutzt werden, bevor es mit einer Temperatur, die beispielsweise bis auf 120°C abgesenkt sein kann, als nahezu einziger wesentlicher Energieverlust der Gesamtanlage bei 31 in die Atmosphäre emittiert wird. Die feuchte, aufgewärmte Abluft des Vorwärmers 14 kann ganz oder teilweise bei 32 abgezweigt und als Verbrennungsluft in der sekundären Verbrennungskraftmaschine 22 genutzt werden.

Je nach Kohlenstoff- und Gasbilanz der Gesamtanlage kann die Betriebsweise der sekundären Verbrennungskraftmaschine 22 beispielsweise über die Drehzahl so gesteuert werden, dass eine nahezu optimale Nutzung der insgesamt erzeugten Synthesegasmenge in der Anlage realisiert werden kann. Insgesamt lässt sich durch diese Ausgestaltung die erzeugte Strommenge im Verhältnis zu dem Energieinhalt der dem Verfahren zugeführten kohlenstoffhaltigen Materialien 13 gegenüber herkömmlichen Anlagen erheblich verbessern.

## Patentansprüche

1. Verfahren zur Erzeugung mechanischer Leistung mit Hilfe wenigstens einer Verbrennungskraftmaschine (1), deren Abgase (6) wenigstens teilweise als Vergasungsmittel in einem Vergaser (7) unter Anwesenheit kohlenstoffhaltiger Materialien (13) zu Synthesegas reduziert werden, **dadurch gekennzeichnet, dass** in der Verbrennungskraftmaschine (1) technischer Sauerstoff für die Verbrennung eingesetzt wird, wobei die Verbrennungskraftmaschine überstöchiometrisch betrieben wird und der im Abgas noch vorhandene Sauerstoff als Oxidationsgas im Vergaser (7) eingesetzt wird.

2. Verfahren nach Anspruch 1, **dadurch gekennzeichnet, dass** die Vergasung in einem Gegenstrom-Wanderbett-Vergaser mit Feststoffmassenstrom durchgeführt wird.

3. Verfahren nach Anspruch 2, **dadurch gekennzeichnet, dass** als Vergaser (7) ein Vertikalschachtofen eingesetzt wird.

4. Verfahren nach Anspruch 3, **dadurch gekennzeichnet, dass** der Vertikalschachtofen ein Elektroniederschachtofen oder ein Hochofen zur Metallherstellung ist.

5. Verfahren nach einem der vorhergehenden Ansprüche, **dadurch gekennzeichnet, dass** die kohlenstoffhaltigen Materialien (13) in einem Vorwärmer (14) vor dem Eintritt in den Vergaser (7) vorgewärmt werden.

6. Verfahren nach einem der vorhergehenden Ansprüche, **dadurch gekennzeichnet, dass** die Verbrennungskraftmaschine (1) mit Kühlmittel gekühlt wird, das wenigstens teilweise als Vergasungsmittel eingesetzt wird.

7. Verfahren nach Anspruch 6, **dadurch gekennzeichnet, dass** das als Vergasungsmittel eingesetzte Kühlmittel nach dem Verlassen eines Kühlmittelkreislaufes (3) dem Abgasstrom der Verbrennungskraftmaschine (1) beigegeben wird und/oder unmittelbar in die Brennräume der Verbrennungskraftmaschine (1) eingespritzt wird.

8. Verfahren nach einem der vorhergehenden Ansprüche, **dadurch gekennzeichnet, dass** das Abgas teilweise zur Einlassseite (9) der Verbrennungskraftmaschine rückgeführt wird.

9. Verfahren nach Anspruch 8, **dadurch gekennzeichnet, dass** der rückgeführte Abgasteilstrom in einem Wärmetauscher (10) Wärme an einen Kühlmittelstrom abgibt, der dem Vergaser (7) zugeführt wird, in dem Vorwärmer (14) Wärme zur Vorwärmung der kohlenstoffhaltigen Substanzen (13) abgibt und/oder Wärme zum Betrieb des Vergasers (7) abgibt.

10. Verfahren nach einem der vorhergehenden Ansprüche, **dadurch gekennzeichnet, dass** das Synthesegas wenigstens teilweise zum Betrieb der wenigstens einen Verbrennungskraftmaschine (1) eingesetzt wird.

11. Verfahren nach einem der vorhergehenden Ansprüche, **dadurch gekennzeichnet, dass** wenigstens eine Sekundär-Verbrennungskraftmaschine (22) zur zusätzlichen Erzeugung mechanischer Leistung vorgesehen ist, die mit in dem Vergaser erzeugtem Synthesegas betrieben wird.

12. Verfahren nach Anspruch 11, **dadurch gekennzeichnet, dass** die wenigstens eine Sekundär-Verbrennungskraftmaschine (22) mit normaler Luft als Oxidationsmittel betrieben wird.

13. Verfahren nach Anspruch 11 oder 12, **dadurch gekennzeichnet, dass** dem Abgasstrom der wenigstens einen Sekundär-Verbrennungskraftmaschine (22) über Wärmetauscher im Bereich des Vergasers (7) und/oder im Bereich des Vorwärmers (14) Wärme zur Förderung der jeweiligen Prozesse entzogen wird.

14. Verfahren nach einem der Ansprüche 11 bis 13, **dadurch gekennzeichnet, dass** die Abgase der wenigstens einen Sekundär-Verbrennungskraftmaschine (22) mittels eines Katalysators (26) gereinigt werden.

15. Verfahren nach einem der vorhergehenden Ansprüche, **dadurch gekennzeichnet, dass** die mechanische Leistung zur Stromerzeugung mittels wenigstens eines Generators (2) verwendet wird.

16. Verfahren nach einem der vorhergehenden Ansprüche, **dadurch gekennzeichnet, dass** der technische Sauerstoff mittels eines Luftzerlegers (5) oder einer Druckwechseladsorptionsanlage erzeugt wird.

17. Verfahren nach Anspruch 15 und 16, **dadurch gekennzeichnet, dass** ein geringer Teil des erzeugten Stromes zum Betreiben des Luftzerlegers oder der Druckwechseladsorptionsanlage aufgewendet wird.

18. Verfahren nach einem der vorhergehenden Ansprüche, **dadurch gekennzeichnet, dass** das erwärmte Kühlwasser der wenigstens einen Verbrennungskraftmaschine als Fernwärme genutzt wird.

19. Verfahren nach einem der vorhergehenden Ansprüche, **dadurch gekennzeichnet, dass** die Zusammensetzung des Gemisches zum Betreiben der wenigstens einen Verbrennungskraftmaschine (1) durch eine Steuereinheit (19) aus den Teilgasströmen aus technischem Sauerstoff und Synthesegas gesteuert wird.

20. Verfahren nach Ansprüche 8 oder 9 und 19, **dadurch gekennzeichnet, dass** mittels der Steuereinheit (19) auch der rückgeführte Abgasstrom zur Gemischzusammensetzung berücksichtigt wird.

21. Verfahren nach Anspruch 19 oder 20, **dadurch gekennzeichnet, dass** die Beigabe kohlenstoffhaltiger Materialien (13) für den Vergasungsprozess durch die Steuereinheit (19) gesteuert wird.

22. Verfahren nach einem der vorhergehenden Ansprüche, **dadurch gekennzeichnet, dass** dem Vergaser zum Hochfahren der Anlage unmittelbar Brennstoff und Sauerstoff zugeführt werden.

## Claims

1. Method for producing mechanical power by means of at least one combustion engine (1), whose exhaust gases (6) are reduced, at least partly, as gasification agents in a gasifier (7) in the presence of carbon-containing materials (13) to form synthesis gas, **characterised in that** technical oxygen is used for the combustion in the combustion engine (1), whereby the combustion engine is operated at super-stoichiometric conditions and the oxygen still present in the exhaust gas is used as oxidation gas in the gasifier (7).

2. Method according to claim 1, **characterised in that** the gasification is performed in a countercurrent-moving bed-gasifier with a solid mass flow.

3. Method according to claim 2, **characterised in that** a vertical shaft furnace is used as gasifier (7).

4. Method according to claim 3, **characterised in that** the vertical shaft furnace is an electrical low-shaft furnace or a blast furnace for metal production.

5. Method according to any one of the preceding claims, **characterised in that** the carbon-containing materials (13) are preheated in a pre-heating unit (14) before entry into the gasifier (7).

6. Method according to any one of the preceding claims, **characterised in that** the combustion engine (1) is cooled by means of coolant that is used as gasification agent, at least in part.

7. Method according to claim 6, **characterised in that** the coolant used as gasification agent is added to the exhaust gas flow of the combustion engine (1) after it exits from a coolant cycle (3) and/or is injected directly into the combustion chambers of the combustion engine (1).

8. Method according to any one of the preceding claims, **characterised in that** the exhaust gas is returned, in part, to the inlet side (9) of the combustion engine.

9. Method according to claim 8, **characterised in that** the returned partial flow of exhaust gas releases heat to a coolant flow in a heat exchanger (10), with the coolant flow being supplied to the gasifier (7), in which the preheating unit (14) releases heat for preheating the carbon-containing substances (13) and/or releases heat for operation of the gasifier (7).

10. Method according to any one of the preceding claims, **characterised in that** the synthesis gas is used, at least in part, for operation of the at least one combustion engine (1).

11. Method according to any one of the preceding claims, **characterised in that** at least one secondary combustion engine (22) for additional production of mechanical power is provided and is operated by means of the synthesis gas that is produced in the gasifier.

12. Method according to claim 11, **characterised in that** the at least one secondary combustion engine (22) is operated with normal air as oxidation agent.

13. Method according to claim 11 or 12, **characterised in that** heat for promoting the respective processes is removed from the exhaust gas flow of the at least one secondary combustion engine (22) by means of heat exchanger(s) in the area of the gasifier (7) and/or in the area of the preheating unit (14).

14. Method according to any one of the claims 11 to 13, **characterised in that** the exhaust gases of the at least one secondary combustion engine (22) are cleaned by means of a catalytic converter (26).

15. Method according to any one of the preceding claims, **characterised in that** the mechanical power is used for the production of electrical current by means of at least one generator (2).

16. Method according to any one of the preceding claims, **characterised in that** the technical oxygen is produced by means of an air separator (5) or a pressure swing adsorption facility.

17. Method according to claim 15 and 16, **characterised in that** a small part of the electrical current produced is expended for operating the air separator or the pressure swing adsorption facility.

18. Method according to any one of the preceding claims, **characterised in that** the heated cooling water of the at least one combustion engine is used as district heating.

19. Method according to any one of the preceding claims, **characterised in that** the composition of the mixture for operation of the at least one combustion engine (1) is controlled by a control unit (19) based on the partial gas flows of technical oxygen and synthesis gas.

20. Method according to claims 8 or 9 and 19, **characterised in that** the control unit (19) is used too also take into account the returned exhaust gas flow for composing the mixture.

21. Method according to claim 19 or 20, **characterised in that** the addition of carbon-containing materials (13) for the gasification process is controlled by the control unit (19).

22. Method according to any one of the preceding claims, **characterised in that**, for start-up of the facility, combustibles and oxygen are supplied directly to the gasifier.

## Revendications

1. Procédé de génération de puissance mécanique à l'aide d'au moins un moteur à combustion interne (1) dont les gaz d'échappement (6) sont réduits au moins partiellement en tant que moyen de carburation dans un carburateur (7) en présence de matières contenant du carbone (13) en gaz de synthèse, **caractérisé en ce que** de l'oxygène technique est utilisé pour la combustion dans le moteur à combustion interne (1), dans lequel le moteur à combustion interne est exploité dans des conditions surstoechiométriques et l'oxygène encore présent dans le gaz d'échappement est utilisé en tant que gaz d'oxydation dans le carburateur (7).

2. Procédé selon la revendication 1, **caractérisé en ce que** la carburation est effectuée dans un carburateur à lit mobile à contre-courant avec courant massique solide.

3. Procédé selon la revendication 2, **caractérisé en ce qu'**un four à cuve verticale est utilisé en tant que carburateur (7).

4. Procédé selon la revendication 3, **caractérisé en ce que** le four à cuve verticale est un bas fourneau électronique ou un haut fourneau pour la fabrication de métal.

5. Procédé selon une des revendications précédentes, **caractérisé en ce que** les matières contenant du carbone (13) sont réchauffées dans un réchauffeur (14) avant l'entrée dans le carburateur (7).

6. Procédé selon une des revendications précédentes, **caractérisé en ce que** le moteur à combustion interne (1) est refroidi avec du réfrigérant qui est utilisé au moins partiellement en tant que moyen de carburation.

7. Procédé selon la revendication 6, **caractérisé en ce que** le réfrigérant utilisé en tant que moyen de carburation est ajouté après avoir quitté un circuit de réfrigérant (3) au courant de gaz d'échappement du moteur à combustion interne (1) et/ou est injecté directement dans les chambres de combustion du moteur à combustion interne (1).

8. Procédé selon une des revendications précédentes, **caractérisé en ce que** le gaz d'échappement est partiellement renvoyé au côté entrée (9) du moteur à combustion interne.

9. Procédé selon la revendication 8, **caractérisé en ce que** le courant partiel de gaz d'échappement renvoyé dégage de la chaleur dans un échangeur de chaleur (10) à un courant de réfrigérant qui est amené au carburateur (7), dégage de la chaleur dans le réchauffeur (14) pour le réchauffage des substances contenant du carbone (13) et/ou dégage de la chaleur pour l'exploitation du carburateur (7).

10. Procédé selon une des revendications précédentes, **caractérisé en ce que** le gaz de synthèse est utilisé au moins partiellement pour l'exploitation de l'au moins un moteur à combustion interne (1).

11. Procédé selon une des revendications précédentes, **caractérisé en ce qu'**au moins un moteur à combustion interne secondaire (22) est prévu pour la génération supplémentaire de puissance mécanique qui est exploitée avec du gaz de synthèse généré dans le carburateur.

12. Procédé selon la revendication 11, **caractérisé en ce que** l'au moins un moteur à combustion interne secondaire (22) est exploité avec de l'air normal en tant que moyen d'oxydation.

13. Procédé selon la revendication 11 ou 12, **caractérisé en ce que** de la chaleur est prélevée du courant de gaz d'échappement de l'au moins un moteur à combustion interne secondaire (22) par le biais d'échangeurs de chaleur dans la région du carburateur (7) et/ou dans la région du réchauffeur (14) pour la promotion des processus respectifs.

14. Procédé selon une des revendications 11 à 13, **caractérisé en ce que** les gaz d'échappement de l'au moins un moteur à combustion interne secondaire (22) sont purifiés au moyen d'un catalyseur (26).

15. Procédé selon une des revendications précédentes, **caractérisé en ce que** la puissance mécanique est utilisée pour la génération de courant au moyen d'au moins un générateur (2).

16. Procédé selon une des revendications précédentes, **caractérisé en ce que** l'oxygène technique est généré au moyen d'un décompositeur d'air (5) ou d'une installation d'adsorption à changement de pression.

17. Procédé selon les revendications 15 et 16, **caractérisé en ce qu'**une faible partie du courant généré est consacrée à l'exploitation du décompositeur d'air ou de l'installation d'adsorption à changement de pression.

18. Procédé selon une des revendications précédentes, **caractérisé en ce que** l'eau de refroidissement chauffée de l'au moins un moteur à combustion interne est utilisée en tant que chauffage à distance.

19. Procédé selon une des revendications précédentes, **caractérisé en ce que** la composition du mélange pour l'exploitation de l'au moins un moteur à combustion interne (1) est commandée par un module de commande (19) à partir des courants de gaz partiels d'oxygène technique et de gaz de synthèse.

20. Procédé selon les revendications 8 ou 9 et 19, **caractérisé en ce que** le courant de gaz d'échappement renvoyé est également pris en compte pour la composition du mélange au moyen du module de commande (19).

21. Procédé selon la revendication 19 ou 20, **caractérisé en ce que** l'ajout de matières contenant du carbone (13) pour le processus de carburation est commandé par le module de commande (19).

22. Procédé selon une des revendications précédentes, **caractérisé en ce que** du carburant et de l'oxygène sont directement amenés au carburateur pour le démarrage de l'installation.
